# EUROPEAN PATENT SPECIFICATION

(11) **EP 1 485 002 B1**
(45) Date of publication and mention of the grant of the patent: **22.08.2007**
(21) Application number: 02779053.4
(22) Date of filing: 12.11.2002
(51) Int. Cl.: A47J 43/10

(54) **A COVERED KITCHEN UTENSIL AND A COVERING FOR A KITCHEN UTENSIL**
UMHÜLLTES KÜCHENGERÄT UND UMHÜLLUNG FÜR EIN KÜCHENGERÄT
USTENSILE DE CUISINE GAINE ET SON GAINAGE

(30) Priority: 12.03.2002 US 363091 P
(43) Date of publication of application: 15.12.2004
(73) Proprietor: Browne & Co. Ltd, Markham, Ontario, L3R 1E3 (CA)
(72) Inventor: BROWNE, Peter, Browne & Co. Ltd., Markham, Ontario L3R 1E3 (CA)
(74) Representative: Mair, Richard Douglas
(86) International application number: PCT/CA2002/001739
(87) International publication number: WO 2003/075728

(56) References cited:
- EP-A- 0 286 394
- CH-A- 170 402
- DE-C- 334 157
- DE-C- 861 913
- US-B1- 6 257 752

## Description

### TECHNICAL FIELD

The present invention relates to a kitchen utensil with a covered elongate member such as a covered whisk.

### BACKGROUND OF THE INVENTION

This invention relates to kitchen utensils that are used in contact with food containing surfaces including the surfaces of vessels such as pots and pans, bowls, bottles and jars and other foods and equipment and with food contained within or supported by such surfaces. For example such kitchen utensils include whisks, pastry blenders and cleaning tools. It is often important when using such kitchen utensils that the contact between the utensil and the vessel, or the food contained in the vessel in the case of a whisk or pastry blender, be maximised for efficient and effective use.

Generally such whisks comprises loops, blades, bristles or other elongate members that have a cross-sectional profile that is round. For example, Figure 1a illustrates a utensil 10, which is a conventional whisk, generally having an array of flexible elongate members 18 (e.g. whisking elements or cleaning elements) connected at an inner end 14 of a handle 12. Other conventional whisk configurations are known to those skilled in the art such as the balloon whisk, flat whisk, and Swedish style helical whisk illustrated in applicant's U.S. Patent No. 6,257,752 B1 issued July 10, 2001. Additional kitchen utensil configurations such as the ball whisk described in U.S. Patent No. 6,264,356 B1 issued July 24, 2001 to WMF AG and the stirrer described in U.S. Patent No. 5,947,595 issued September 7, 1999 to Rosle Metallwarenfabrik GmbH & Co. KG are also known. Another example of a kitchen utensil is a cleaning tool that generally has cleaning elements such as bristles extending from a central body.

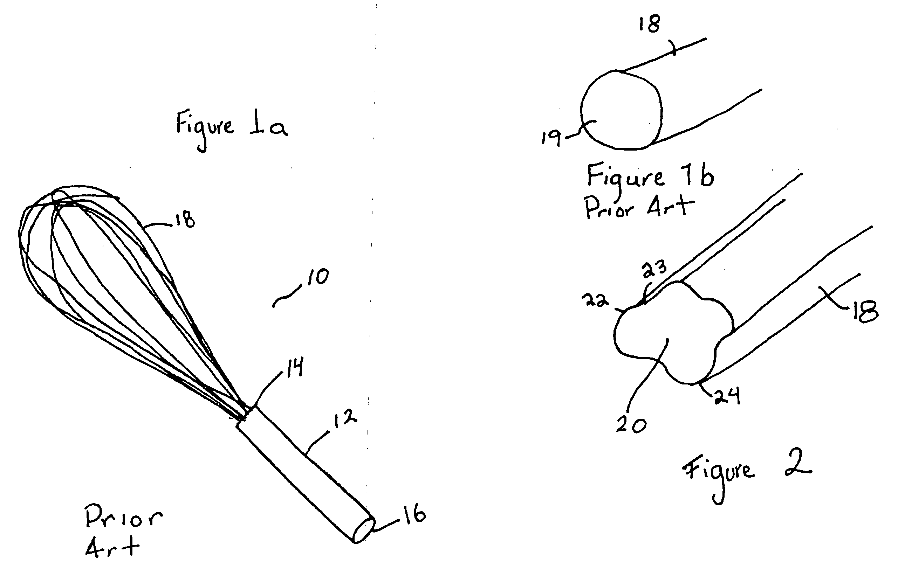

Common among the above described kitchen utensils is the round shape of the cross-sectional profile 19 of the elongate members 18 as illustrated in Figure 1b. The round profile 19 of the elongate members 18 (e.g. whisking elements or cleaning elements) of the kitchen utensils tends to minimize the frictional engagement of the elements and the vessel or food with which the kitchen utensil is being used. As such, for example, most whisks are not well-suited for scraping food from a vessel such as from a mixing bowl to a baking pan. Increased user effort is often required to achieve desired results or more than one utensil may be required when such results are not achievable.

It is therefore desired to provide a kitchen utensil that improves the contact between the utensil and vessel or food within the vessel without the requirement of increasing the effort of the user.

CH 170402A discloses a kitchen utensil comprising a handle and a number of elongated whisking portions attached at both ends to the handle. A number of different shapes for the elongated portions are described.

### SUMMARY OF THE INVENTION

In accordance with the present invention there is provided a kitchen utensil comprising a handle and at least one wire-like flexible elongate member having at least one end secured to the handle, the elongate member comprising a thin, flexible element, characterised in that the elongate member further comprises a covering of resilient material suitable for food processing having a non-round peripheral cross-sectional shape for contacting at least one of a food and a food containing surface, the covered flexible element having a peripheral cross-sectional shape that differs from that of the flexible element alone.

### BRIEF DESCRIPTION OF THE DRAWINGS

Further features and advantages of the present invention will become apparent from the following detailed description, taken in combination with the appended drawings, in which:
Fig. la shows a kitchen utensil namely a whisk according to the prior art;
Fig. 1b shows a cross-sectional view of a typical elongate member (i.e. wire loop) of the prior art kitchen utensil of Fig. 1a;
Fig. 2 shows a cross-sectional view of a wire-like elongate member for a kitchen utensil in accordance with the invention;
Fig. 3a-d show other embodiments of the cross-section of an elongate member for a kitchen utensil of the present invention;
Fig. 3y shows a cross-sectional view of an elongate member having an inner core surrounded by tubing made from a resilient material configured in accordance with the invention;
Fig. 4 shows an alternate embodiment of a kitchen utensil with the elongate members of the kitchen utensil configured in accordance with the invention and conforming to the shape of the interior profile of a vessel; and
Fig. 5 shows a further alternate embodiment of a kitchen utensil with the elongate members of the kitchen utensil configured in accordance with the invention conforming to the shape of the interior profile of a vessel.

It will be noted that throughout the appended drawings, like features are identified by like reference numerals.

### DETAILED DESCRIPTION OF THE PREFERRED EMBODIMENT

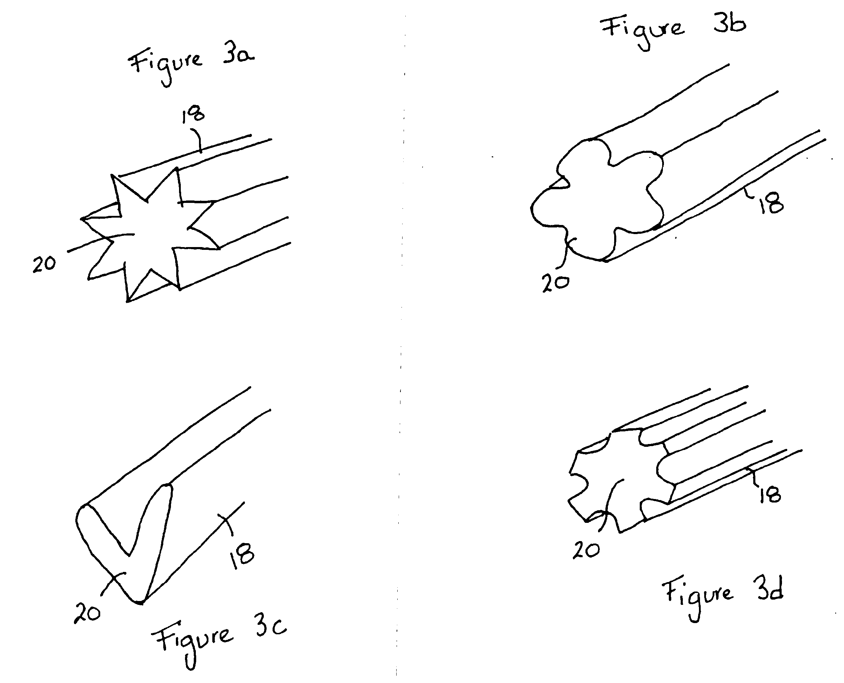

Fig. 2 illustrates a non-round cross-sectional profile 20 of an elongate member 18 constructed in accordance with the invention for a kitchen utensil such as the whisk 10 of Fig. 1. The general peripheral edge 22 of profile 20 in Fig. 2 is of a varying diameter from the central axis of elongate member 18 and defines a plurality of valleys on recesses 23 and peaks or projections 24 as measured from a notional circumference around member 18 (not shown) determined from its average diameter. The peripheral edge 22 increases the surface area of elongate member 18 relative to a round profile (e.g. profile 19 of Fig. 1b) for a similarly sized elongate member 18 thus facilitating increased contact between utensil 10 and any food or surface with which it may be used.

When employed in a whisk configuration for whipping liquids, such a profile 20 adds local turbulence to the liquid and increases air entrainment.

Figs. 3a-d show different embodiments of the cross-sectional profile 20. Fig. 3a shows a star-like shape. Fig. 3b shows a flower-like shape. Fig. 3c shows a V-shape. Fig. 3d shows a cog shape. Preferably the peripheral edge 22 of the elongate member 18 defines a series of projections and grooves or recesses located around elongate member 18; however, it will be understood that any non-round shape may be used that increases the surface area of elongate member 18 for contact with the food containing surface and/or the food with which utensil 10 is to be used. Additional shapes include rectangular shapes such as a square, a pentagon, a hexagon, etc. It being understood that such regular n-sided equilateral shapes having many edges such that the shape approaches a round shape are less preferred.

Each elongate member 18 is preferably made from a flexible resilient material, preferably metal, plastic, nylon or silicon such as by extrusion/drawing methods understood to those in the art. For kitchen utensils that directly contact food for food preparation, a suitable neutral material should be used such as stainless steel or food-friendly plastics. The degree of flexibility of the elongate member 18 may be chosen according to the intended use of utensil 10. Flexibility may be varied through choice of materials and dimensioning of the cross-section profile 20.

Fig. 3y shows a further embodiment of elongate member 18 comprising a central core 22, made from a flexible metal (stainless steel), and a surrounding tubing or covering 24, made, for example, from resilient silicon. Also, the use of a covering made from a flexible resilient material increases the diameter of the elongate element 18 without significantly changing the flexibility and spring characteristics of the covered elongate member.

The use of a central core and a surrounding covering has been previously described in U.S. Patent No. 6,257,752 incorporated herein by reference. At least one of the covering 24 and central core 22 is connected at one or more respective ends thereof to handle 12. Covering 24 may be secured at one or both ends but free to rotate or twist about elongate member 18. Alternatively, the covering 24 may be secured throughout its length to central core 22 such as by adhesive bonding or simply surround central core 22 and is left unsecured while securing at least one end of central core 22 to handle 12. The later alternative is not preferred if the covering 24 is configured relative to central core 22 to permit excessive radial movement of covering 24. Such may negate the increase in frictional contact between elongate member 18 and the food or surface with which it is being used resulting from the non-round profile.

In another embodiment of the invention central core 22 of elongate member 18 can be covered by a resilient material using a molding technique. Each central core 22 is covered individually and later secured to handle 12 as is described above. Also central core 22 can be secured to handle 12 and a covering 24 can be molded on to central core 22 and handle 12.

The performance of whisks having uncoated stainless steel wires and whisks having stainless steel wires with silicon in accordance with the invention were compared. Two whisks having uncoated stainless steel wires and two whisks having stainless steel wires coated with silicon were selected to evaluate their comparative performance. The diameter of the uncoated wires was 0.005" (0.01 cm), and the diameter of the coated wires was 0.095" (0.24 cm). In the test, the coated wires were star-shaped as illustrated in FIG. 3a. The performance of the whisks was evaluated by mixing three raw eggs in identical containers, and then comparing results. The eggs were mixed and observed after 10, 20 and 40 cycles. The result of the testing illustrated that the eggs mixed with the silicon coated whisk appeared more thoroughly mixed after each interval.

It will be understood to those skilled in the art that characteristics of the elongate member may be varied by using materials of varying degrees of flexibility, particularly for a member comprising a central core and tubing. For example, an elongate member constructed from a relatively inflexible core with a tubing exhibiting flexible projections may provide superior cleaning/scraping action to a similar member comprising a more flexible core material. In general, a cleaning tool will be configured to be more rigid that a tool primarily intended for whipping.

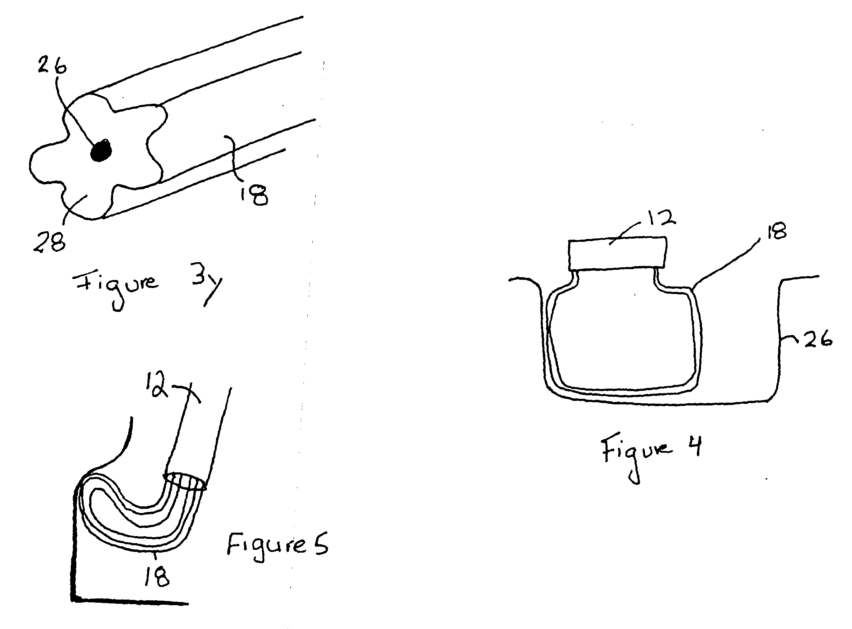

Referring now to Fig. 4, a further embodiment of a kitchen utensil 10 of the present invention is shown. The kitchen utensil 10 comprises a plurality of flexible elongate members 18 shaped to conform to the interior profile of a vessel 26 such as a pot or bowl. It will be understood that the elongate members 18 could be shaped to conform to different shapes depending on the end use requirements. For example, the elongate member 18 could be formed to conform to the interior profile of a bottle, or could be formed into a hook shape to be able to reach inside the corners of different shaped vessels as illustrated in Fig. 5. It will be further understood by a person skilled in the art that the loops will be made of a resilient flexible material that allows for flexibility within the movement of the loops whilst maintaining the contour of the required shape.

The embodiment(s) of the invention described above is(are) intended to be exemplary only. The scope of the invention is therefore intended to be limited solely by the scope of the appended claims.

## Claims

1. A kitchen utensil (10) comprising a handle (11) and at least one wire-like flexible elongate member (18) having at least one end secured to the handle (12), the elongate member (18) comprising a thin, flexible element (22), **characterised in that** the elongate member (18) further comprises a covering of resilient material (24) suitable for food processing having a non-round peripheral cross-sectional shape for contacting at least one of a food and a food containing surface, the covered flexible element (22) having a peripheral cross-sectional shape that differs from that of the flexible element (22) alone.

2. The kitchen utensil (10) as claimed in claim 1 wherein the non-round shape comprises a series of peripheral projections and recesses.

3. The kitchen utensil (10) as claimed in any one of claims 1 and 2 wherein the non-round peripheral shape is selected from the group of V, flower, star, square and cog shapes.

4. The kitchen utensil (10) as claimed in any one of claims 1, 2 and 3 wherein the covering (24) comprises at least one of plastic, nylon and silicone.

5. The kitchen utensil (10) as claimed in any one of claims 1, 2, 3 and 4 wherein the elongate members (18) are disposed in a whisk configuration selected from the group comprising of a piano whisk configuration, an egg whisk configuration, a flat whisk configuration, a balloon whisk configuration and a helical whisk configuration.

6. The kitchen utensil (10) as claimed in any one of claims 1, 2, 3, 4 and 5 wherein the at least one elongate member (18) is configured to conform to an internal profile of a vessel and wherein said covering (24) defining a cross-sectional shape having a peripheral edge for maximizing frictional contact with the vessel.

## Patentansprüche

1. Küchengerät (10) umfassend einen Griff (11) und mindestens ein drahtartiges biegsames langgestrecktes Element (18), das mindestens ein Ende aufweist, das an dem Griff (12) befestigt ist, wobei das langgestreckte Element (18) ein dünnes biegsames Element (22) umfasst, **dadurch gekennzeichnet, dass** das langgestreckte Element (18) ferner eine Umhüllung aus elastischem für Lebensmittelverarbeitung geeignetem Material (24) umfasst, die eine nicht-runde periphere Querschnittsform zum Berühren eines Lebensmittels und/oder einer ein Lebensmittel umfassenden Oberfläche aufweist, wobei das umhüllte biegsame Element (22) eine periphere Querschnittsform aufweist, die sich von der des biegsamen Elements (22) allein unterscheidet.

2. Küchengerät (10) nach Anspruch 1, bei dem die nicht-runde Form eine Anzahl von peripheren Vorsprüngen und Aussparungen umfasst.

3. Küchengerät (10) nach Anspruch 1 oder 2, bei dem die nicht-runde periphere Form gewählt ist aus der Gruppe von V-, Blumen-, Stern-, Quadrat- und Zahnformen.

4. Küchengerät (10) nach einem der Ansprüche 1, 2 und 3 bei dem die Umhüllung (24) mindestens eine aus Kunststoff, Nylon oder Silikon umfasst.

5. Küchengerät (10) nach einem der Ansprüche 1, 2, 3 und 4 wobei die langgestreckten Elemente (18) in einer Rührbesenkonfiguration angeordnet sind, die aus der eine "Piano"-Rührbesenkonfiguration, eine "Ei"-Rührbesenkonfiguration, eine flache Rührbesenkonfiguration, eine "Ballon"-Rührbesenkonfiguration und eine Schraubenlinien-Rührbesenkonfiguration umfassenden Gruppe gewählt ist.

6. Küchengerät (10) nach einem der Ansprüche 1, 2, 3, 4 und 5, bei dem das mindestens eine langgestreckte Element (18) ausgestaltet ist, um sich an den inneren Querschnitt eines Gefäßes anzupassen und bei dem die Umhüllung (24) eine Querschnittsform definiert, die einen peripheren Rand zum Maximieren des Reibungskontakts mit dem Gefäß aufweist.

## Revendications

1. Un ustensile de cuisine (10) comprenant une poignée (11) et au moins un élément élongé flexible similaire à un fil métallique (18) ayant au moins une extrémité fixée à la poignée (12), l'élément élongé (18) comprenant un élément flexible fin (22), **caractérisé en ce que** l'élément élongé (18) comprend en outre une gaine de matériau souple (24) appropriée pour le traitement des aliments ayant une forme en coupe transversale périphérique non arrondie pour entrer en contact avec au moins un élément parmi un aliment et une surface contenant un aliment, l'élément flexible gainé (22) ayant une forme en coupe transversale périphérique qui diffère de celle de l'élément flexible (22) en lui-même.

2. L'ustensile de cuisine (10) selon la revendication 1, dans lequel la forme non arrondie comprend une série de saillies et de renfoncements périphériques.

3. L'ustensile de cuisine (10) selon l'une quelconque des revendications 1 et 2, dans lequel la forme périphérique non arrondie est sélectionnée à partir du groupe constitué des formes en V, en fleur, étoilée, carrée et dentée.

4. L'ustensile de cuisine (10) selon l'une quelconque des revendications 1, 2 et 3, dans lequel la gaine (24) comprend au moins un parmi de la matière synthétique, le nylon et la silicone.

5. L'ustensile de cuisine (10) selon l'une quelconque des revendications 1, 2, 3 et 4, dans lequel les éléments élongés (18) sont disposés dans une configuration de fouet de cuisine sélectionnée à partir du groupe constitué d'une configuration de fouet dit piano, d'un fouet à blanc d'oeuf, d'un fouet plat, d'un fouet ballon, et une configuration de fouet hélicoïdale.

6. L'ustensile de cuisine (10) selon l'une quelconque des revendications 1, 2, 3, 4 et 5, dans lequel le au moins un élément élongé (18) est configuré de façon à être conforme à un profil interne d'une cuve et dans lequel ladite gaine (24) définit une forme en coupe transversale ayant un bord périphérique pour maximiser le contact par friction avec la cuve.
